(19) Europäisches Patentamt
European Patent Office
Office européen des brevets

(11) **EP 3 144 920 B1**

(12) **EUROPÄISCHE PATENTSCHRIFT**

(45) Veröffentlichungstag und Bekanntmachung des Hinweises auf die Patenterteilung:
**09.11.2022   Patentblatt 2022/45**

(21) Anmeldenummer: **16188586.8**

(22) Anmeldetag: **13.09.2016**

(51) Internationale Patentklassifikation (IPC):
*G08G 1/16* (2006.01)     *G05D 1/02* (2020.01)
*B60W 30/095* (2012.01)

(52) Gemeinsame Patentklassifikation (CPC):
**G01C 21/3807; B60W 30/0956; G01C 21/3833; G05D 1/0223; G05D 1/0274; G08G 1/163; G08G 1/166;** G05D 1/0246; G05D 2201/0213

(54) **BESTIMMEN EINER SOLL-TRAJEKTORIE FÜR EIN FAHRZEUG**

DETERMINING A TARGET TRAJECTORY FOR A VEHICLE

DÉTERMINATION D'UNE TRAJECTOIRE THÉORIQUE D'UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.09.2015   DE 102015217891**

(43) Veröffentlichungstag der Anmeldung:
**22.03.2017   Patentblatt 2017/12**

(73) Patentinhaber: **Volkswagen Aktiengesellschaft 38440 Wolfsburg (DE)**

(72) Erfinder:
• **Balaghiasefi, Reza**
**38444 Wolfsburg (DE)**

• **Düring, Michael**
**38106 Braunschweig (DE)**
• **Franke, Kai**
**39576 Stendal (DE)**

(74) Vertreter: **Kraus & Weisert Patentanwälte PartGmbB Thomas-Wimmer-Ring 15 80539 München (DE)**

(56) Entgegenhaltungen:
**DE-A1-102010 033 776     DE-A1-102012 009 297**
**DE-A1-102013 005 362     DE-A1-102013 225 057**

**Beschreibung**

Die vorliegende Erfindung betrifft die Bestimmung einer Soll-Trajektorie oder Referenz-Trajektorie für ein Fahrzeug.

Die DE 10 2013 225 057 A1 beschreibt die automatische Steuerung von Fahrzeugen. Dabei wird eine Trajektorie für ein Fahrzeug bestimmt, die die aktuelle Position und die Zielposition verbindet. Diese anfängliche Trajektorie wird nachfolgend modifiziert, so dass die neue Trajektorie ein gegenüber der anfänglichen Trajektorie reduziertes Gesamtbefahrungsrisiko aufweist.

Die DE 10 2012 009 297 A1 beschreibt eine Unterstützung eines Fahrers beim Führen eines Fahrzeugs. Dabei wird eine Vielzahl an fahrbaren Trajektorien des Fahrzeugs und anderer Verkehrsteilnehmer anhand deren statistischer Steuerprofile auf einem Zeit-Horizont prognostiziert. Manöveroptionen werden kognitiv anhand von Kontext-Informationen aus einer digitalen Karte, aus Bewegungsmustern und Bewegungsmerkmalen erkannt.

Die DE 60 2005 001 615 T2 beschreibt das Ermitteln einer Menge von Manövern, welche ein Fahrzeug ausführen kann und durch welche eine Kollision mit einem Hindernis vermieden werden kann.

Die DE 10 2012 203 187 A1 offenbart die Auslegung einer Bewegungstrajektorie oder einer Schar von Bewegungstrajektorien, wobei die prädizierte Bewegungstrajektorie während des Fahrmanövers ständig überwacht wird und im Bedarfsfall aufgrund einer sich dynamisch ändernden Fahrsituation adaptiert wird. Falls dies nicht möglich ist, wird die Bewegungstrajektorie verworfen und neu prädiziert.

Die DE 10 2013 217 486 A1 beschreibt eine Suche in einem Belegungsgitter nach belegten Gitterzellen, die einen Freiraum begrenzen.

Zukünftige Sicherheitssysteme für Fahrzeuge bestimmen ihre Reaktion nicht nur anhand einer egozentrierten Situationsanalyse, sondern anhand einer kooperativen Abstimmung mit anderen Verkehrsteilnehmern. Dabei wird unter der kooperativen Abstimmung mit anderen Verkehrsteilnehmern verstanden, dass die jeweils beteiligten Verkehrsteilnehmer in Konfliktsituationen gemeinsam Lösungsstrategien identifizieren, entscheiden und durchführen, um für alle Verkehrsteilnehmer insgesamt ein verbessertes Ergebnis zu erzielen.

Die kooperative Abstimmung wird meist durch ein komplexes System aus Wahrnehmung, Interpretation, Analyse, Entscheidung und Durchführung realisiert, wobei diese Aktionen auf unterschiedliche Agenten verteilt sind. Die kooperative Abstimmung umfasst die Berechnung einer komplexen Manöverplanung unter Berücksichtigung eines vorhandenen Umfeldmodells und einer Prädiktion des Verhaltens der beteiligten Verkehrsteilnehmer.

Die vorliegende Erfindung stellt sich die Aufgabe, das Verhalten der beteiligten Verkehrsteilnehmer bei der Bestimmung und/oder Überwachung einer Soll-Trajektorie für ein Fahrzeug besser zu berücksichtigen, als dies nach dem Stand der Technik der Fall ist.

Erfindungsgemäß wird diese Aufgabe durch ein Verfahren zum automatischen Bestimmen und/oder Überwachen einer Soll-Trajektorie für ein Fahrzeug nach Anspruch 1, durch eine Vorrichtung nach Anspruch 9 und durch ein Fahrzeug nach Anspruch 10 gelöst. Die abhängigen Ansprüche definieren bevorzugte und vorteilhafte Ausführungsformen der vorliegenden Erfindung.

Im Rahmen der vorliegenden Erfindung wird ein Verfahren zum automatischen Bestimmen und/oder Überwachen einer Soll-Trajektorie für ein Fahrzeug bereitgestellt. Dabei verbindet eine Soll-Trajektorie einen Startpunkt, welcher bei der ersten bzw. initialen Bestimmung der Soll-Trajektorie der aktuellen Position des Fahrzeugs entspricht, mit einem sicheren Zielpunkt. Die Soll-Trajektorie gibt dem Fahrzeug quasi einen Weg vor, auf welchem sich das Fahrzeug vom Startpunkt zum Zielpunkt (insbesondere automatisch) bewegen soll. Das erfindungsgemäße Verfahren umfasst folgende Schritte:

- Bestimmen von verschiedenen (insbesondere allen fahrbaren) Trajektorien des Fahrzeugs, welche den Startpunkt mit dem Zielpunkt verbinden. Diese Bestimmung der endlichen Menge der fahrbaren Trajektorien des Fahrzeugs bildet quasi die Grundlage der Bestimmung der Soll-Trajektorie, die insbesondere der am besten geeigneten Trajektorie aus dieser Menge entspricht.

- Erfassen von jeweils mindestens einer weiteren Soll-Trajektorie für beteiligte Verkehrsteilnehmer. Dabei verbindet jede dieser weiteren Soll-Trajektorien den Startpunkt bzw. die aktuelle Position des jeweiligen Verkehrsteilnehmers mit einem dem jeweiligen Verkehrsteilnehmer zugeordneten sicheren Zielpunkt. Unter einem beteiligten Verkehrsteilnehmer wird dabei ein Verkehrsteilnehmer verstanden, welcher potenziell mit dem Fahrzeug kollidieren könnte, wenn sich das Fahrzeug entlang einer der bestimmten Trajektorien bewegt. Das Erfassen der (weiteren) Soll-Trajektorie eines beteiligten Verkehrsteilnehmers kann dabei auch das Erfassen einer Änderung dieser (weiteren) Soll-Trajektorie des beteiligten Verkehrsteilnehmers umfassen, so das vorteilhafterweise die Änderung dieser Soll-Trajektorie bei dem Bestimmen und/oder Überwachen der Soll-Trajektorie des Fahrzeugs berücksichtigt werden kann. Die Soll-Trajektorie des jeweiligen weiteren Verkehrsteilnehmers kann dabei z.B. per Car2Car-Kommunikation von dem jeweiligen Verkehrsteilnehmer an das Fahrzeug übermittelt werden.

- Bestimmen von kollisionsfreien Trajektorien aus der vorab bestimmten Menge der Trajektorien. Dabei gilt eine Trajektorie als kollisionsfrei, wenn das Fahrzeug nicht mit einem der weiteren Verkehrsteilnehmer kollidiert, wenn sich das Fahrzeug entlang dieser Trajektorie bewegt und wenn sich gleichzeitig der jeweilige Verkehrsteilnehmer auf seiner (mindestens einen) Soll-Trajektorie bewegt.
- Bestimmen und/oder Überwachen der Soll-Trajektorie des Fahrzeugs abhängig von den kollisionsfreien Trajektorien des Fahrzeugs. Dabei wird unter dem Bestimmen und/oder Überwachen der Soll-Trajektorie auch verstanden, dass überprüft wird, ob eine einmal vorgegebene oder bestimmte Soll-Trajektorie des Fahrzeugs beibehalten werden kann. Die Soll-Trajektorie des Fahrzeugs kann insbesondere dann beibehalten werden, wenn sie nach wie vor zu den kollisionsfreien Trajektorien des Fahrzeugs gehört.

Indem bei dem Bestimmen und/oder Überwachen der Soll-Trajektorie des Fahrzeugs auch die weiteren Soll-Trajektorien der beteiligten Verkehrsteilnehmer berücksichtigt werden, wird die Bestimmung und/oder Überwachung der Soll-Trajektorie des Fahrzeugs verbessert. Da insbesondere auch Planänderungen der beteiligten Verkehrsteilnehmer, welche in Form der Änderung der (weiteren) Soll-Trajektorien der Verkehrsteilnehmer erfasst werden, berücksichtigt werden können, kann vorteilhafterweise jederzeit auf die aktuelle Situation reagiert werden.

Insbesondere wird dazu eine Belegtheitskarte bestimmt, welche angibt, ob sich in einer bestimmten Gitterzelle einer Gitterkarte einer Fahrbahn, auf welcher sich das Fahrzeug bewegt, zu einem bestimmten Zeitpunkt einer der Verkehrsteilnehmer befindet. Das Bestimmen der kollisionsfreien Trajektorien kann dann abhängig von dieser Belegtheitskarte durchgeführt werden. Dabei werden als Verkehrsteilnehmer auch statische sowie dynamische Hindernisse betrachtet. Die Belegtheitskarte wird kontinuierlich aktualisiert und beschreibt die Umgebung des Fahrzeugs insbesondere in Form einer binären Variablen. Dabei wird die Existenz eines Hindernisses in einer bestimmten Gitterzelle als eine 1 (als Wert für diese Gitterzelle) betrachtet, während eine Gitterzelle, welche zu dem jeweiligen Zeitpunkt kein Hindernis umfasst, den Wert 0 erhält.

Quasi die Basis der Belegtheitskarte ist die Gitterkarte, welche den von dem Fahrzeug zu befahrenden Fahrbahnabschnitt in Segmente, insbesondere gleichgroße Quadrate oder Rechtecke unterteilt, um dadurch die Geometrie der Fahrbahn zu beschreiben. Dabei wird angenommen, dass sich das Fahrzeug und die beteiligten Verkehrsteilnehmer in einer zweidimensionalen Umgebung (also nicht senkrecht zur Fahrbahn) bewegen. Die Fahrbahn bzw. die Umgebung wird demnach als eine Menge von Zellen, welche jeweils eine bestimmte Länge und eine bestimmte Breite aufweisen, repräsentiert. Dabei kann die Größe der Zellen frei gewählt werden.

Insbesondere wird auch ein Zustandsraum für das Fahrzeug bestimmt, indem ausgehend von den vorher bestimmten Trajektorien des Fahrzeugs pro Gitterzelle für eine oder mehrere Eigenschaften von Punkten der Trajektorie, welche innerhalb der jeweiligen Gitterzelle liegen, das Minimum und das Maximum bestimmt werden. Das Bestimmen und/oder Überwachen der Soll-Trajektorie des Fahrzeugs wird dann abhängig von diesem Zustandsraum durchgeführt. Der Zustandsraum ist demnach ein Raum, welcher durch alle möglichen Konfigurationen beschrieben wird. Unter einer Konfiguration wird dabei die detaillierte Beschreibung eines Zustands des Fahrzeugs, beispielsweise seine Geschwindigkeit oder seine Fahrzeugausrichtung verstanden. Der Zustandsraum kann auch als Kombination der Gitterkarte mit der Menge der vorab bestimmten Trajektorien des Fahrzeugs angesehen werden. Die berechnete Menge von Trajektorien beschreibt dabei alle möglichen Aktionen bzw. Handlungsmöglichkeiten, um mit dem Fahrzeug vom Startpunkt zum sicheren Zielpunkt innerhalb eines vordefinierten Zeithorizonts bzw. Zeitintervalls zu kommen. Jede Trajektorie kann dabei als eine Menge von Punkten $p_i = (u, x, y, v, \psi, t)$ definiert werden. Dabei definiert u die Trajektorie, zu welcher der jeweilige Punkt gehört, x bzw. y definiert eine Koordinate des jeweiligen Punktes, v definiert die Geschwindigkeit, welche das Fahrzeug an dem jeweiligen Punkt beim Befahren der Trajektorie u aufweist, $\psi$ definiert die Fahrzeugausrichtung, welche das Fahrzeug an dem jeweiligen Punkt beim Befahren der Trajektorie u aufweist und t definiert den Zeitpunkt, zu welchem sich das Fahrzeug an dem jeweiligen Punkt befindet, wenn es die Trajektorie u befährt. Die Menge von Punkten innerhalb einer bestimmten Zelle bestimmen die Eigenschaften in dieser Zelle.

In Tabelle 1 sind die Eigenschaften der Punkte gelistet, die zu einer Trajektorie gehören, welche die entsprechende Gitterzelle durchkreuzt.

Tabelle 1

| u | v [m/s] | $\psi$ [°] | t [s] |
|---|---|---|---|
| 122 | 20,00 | 5,02 | 2,21 |
| 122 | 20,05 | 5,01 | 2,22 |
| 122 | 20,10 | 5,00 | 2,23 |
| ... | ... | ... | ... |
| 135 | 21,40 | 10,00 | 2,03 |

(fortgesetzt)

| u | v [m/s] | $\psi$ [°] | t [s] |
|---|---|---|---|
| ... | ... | ... | ... |
| 135 | 21,95 | 9,17 | 2,22 |
| 135 | 22,00 | 9,16 | 2,23 |

Eine solche Tabelle kann für jede Gitterzelle aufgebaut werden. Mit Hilfe einer solchen Tabelle können für jede Gitterzelle und für jede Eigenschaft der Maximalwert und der Minimalwert für die jeweilige Gitterzelle bestimmt werden. Diese multidimensionalen Maximal- und Minimalwerte beschreiben demnach die Beschränkungen der zulässigen Aktionen des Fahrzeugs innerhalb der jeweiligen Gitterzelle. Der Zustandsraum zeigt somit, welche Abweichungen oder welche Eigenschaften in jedem Konfigurationsraum bzw. in jeder Gitterzelle erlaubt sind, so dass der sichere Endzustand bzw. der sichere Endpunkt der Soll-Trajektorie des Fahrzeugs noch immer erreicht werden kann.

Ausgehend von den kollisionsfreien Trajektorien des Fahrzeugs werden für jede Gitterzelle für eine oder für alle Eigenschaften der Punkte der kollisionsfreien Trajektorien, welche die jeweilige Gitterzelle durchkreuzen, das Minimum und das Maximum bestimmt.

Die mindestens eine Eigenschaft ist dabei ausgewählt aus einer Gruppe umfassend:

- eine Geschwindigkeit des Fahrzeugs,
- einer Fahrzeugausrichtung des Fahrzeugs, und
- ein Zeitpunkt, zu welchem sich das Fahrzeug gemäß der jeweiligen Trajektorie in der Gitterzelle befindet.

Anders ausgedrückt wird insbesondere ein gemeinsamer Zustandsraum für das Fahrzeug bestimmt, indem zum einen die Belegtheitskarte und der Zustandsraum für das Fahrzeug kombiniert werden und indem zum anderen die Bewegungen von dynamischen Hindernissen oder Verkehrsteilnehmern anhand deren Soll-Trajektorien bzw. Referenz-Trajektorien und auch statische Hindernisse berücksichtigt werden. Dadurch werden insbesondere alle kollisionsbehafteten Trajektorien aus der Menge aller fahrbaren Trajektorien des Fahrzeugs bestimmt, indem eine Kollisionsüberprüfung aller fahrbaren Trajektorien des Fahrzeugs unter Berücksichtigung aller Hindernisse (dynamischen und statischen) durchgeführt wird. Die kollisionsfreien Trajektorien ergeben sich somit aus der Differenz der Menge aller fahrbaren Trajektorien des Fahrzeugs abzüglich der kollisionsbehafteten Trajektorien des Fahrzeugs. Die kollisionsfreien Trajektorien beschreiben die noch vorhandenen bzw. möglichen Aktionen oder Handlungsmöglichkeiten des Fahrzeugs. Die kollisionsfreien Trajektorien bestimmen somit neue Randbedingungen für jede Gitterzelle.

Abhängig von dem Minimum und dem Maximum der mindestens einen Eigenschaft wird ein Freiheitsgrad pro Gitterzelle bestimmt. Der Freiheitsgrad ist dabei derart bestimmt, dass der Freiheitsgrad umso größer ist, umso mehr Handlungsmöglichkeiten für das Fahrzeug innerhalb der jeweiligen Gitterzelle existieren.

Der Freiheitsgrad $f_{ci,j}$ einer bestimmten Zelle $c_{i,j}$ kann durch folgende Gleichung (1) berechnet werden:

$$f_{ci,j} = \alpha(\Delta V_{ci,j}/v) + \beta(\Delta \Psi_{ci,j}/\psi) + \gamma(\Delta T_{ci,j}/t) \qquad (1).$$

Dabei sind $\alpha$, $\beta$ und $\gamma$ Konstanten. $\Delta V_{ci,j}$ entspricht einer Differenz der maximalen Geschwindigkeit und der minimalen Geschwindigkeit innerhalb der Zelle ci,j. $\Delta \psi_{ci,j}$ ist eine Differenz der maximalen Fahrzeugausrichtung und der minimalen Fahrzeugausrichtung des Fahrzeugs innerhalb der Zelle ci,j. $\Delta T_{ci,j}$ ist eine Differenz der maximalen Zeit (d.h. des Punkts einer kollisionsfreien Trajektorie mit dem größten zeitlichen Abstand zum Zeitpunkt t=0) und der minimalen Zeit (d.h. des Punkts einer kollisionsfreien Trajektorie mit dem kleinsten zeitlichen Abstand zum Zeitpunkt t=0) innerhalb der Zelle $c_{i,j}$, und v, $\psi$ und t sind Eigenschaften von Punkten der kollisionsfreien Trajektorien, wobei v die Geschwindigkeit, welche das Fahrzeug an dem jeweiligen Punkt beim Befahren einer Trajektorie aufweist, definiert, wobei $\psi$ die Fahrzeugausrichtung, welche das Fahrzeug an dem jeweiligen Punkt beim Befahren der Trajektorie aufweist, definiert, und wobei t den Zeitpunkt, zu welchem sich das Fahrzeug an dem jeweiligen Punkt befindet, wenn es die Trajektorie befährt, definiert.

Der Freiheitsgrad wird zu einem ersten Zeitpunkt (t=0) und zu einem späteren zweiten Zeitpunkt bestimmt. Dabei entspricht der erste Zeitpunkt in der Regel dem Zeitpunkt, zu welchem sich das Fahrzeug an dem Startpunkt befindet und die Fahrt entlang der Soll-Trajektorie beginnt. Abhängig von einem Vergleich zwischen dem zu dem zweiten Zeitpunkt bestimmten Freiheitsgrad und mindestens einem Schwellenwert, welcher abhängig von dem zu dem ersten Zeitpunkt bestimmten Freiheitsgrad bestimmt wird, wird die Soll-Trajektorie des Fahrzeugs bestimmt und/oder überwacht.

Mit anderen Worten wird der Freiheitsgrad pro Zelle zu dem zweiten Zeitpunkt mit dem Freiheitsgrad pro Zelle zu dem ersten Zeitpunkt verglichen. Dabei sind bei der Berechnung des Freiheitsgrads zum zweiten Zeitpunkt Änderungen in der Umgebung oder Änderungen in den Plänen von Verkehrsteilnehmern berücksichtigt worden. Wenn sich der Freiheitsgrad zum zweiten Zeitpunkt zu stark im Vergleich zu dem Freiheitsgrad zum ersten Zeitpunkt verschlechtert hat, sollte die Soll-Trajektorie des Fahrzeugs entweder entsprechend angepasst oder völlig neu bestimmt werden.

Beispielsweise können ein erster Schwellenwert abhängig von dem Freiheitsgrad zu dem ersten Zeitpunkt und ein zweiter Schwellenwert abhängig von dem Freiheitsgrad zu dem ersten Zeitpunkt bestimmt werden, wobei der zweite Schwellenwert kleiner als der erste Schwellenwert ist und wobei angenommen wird, dass der Freiheitsgrad umso größer ist, umso mehr Möglichkeiten für das Fahrzeug innerhalb der jeweiligen Gitterzelle existieren. In diesem Fall kann die Soll-Trajektorie des Fahrzeugs, welche zum ersten Zeitpunkt berechnet wurde, beibehalten werden, wenn der zu dem zweiten Zeitpunkt berechnete Freiheitsgrad größer als der erste Schwellenwert ist. Die Soll-Trajektorie des Fahrzeugs wird angepasst oder neu bestimmt, wenn der zu dem zweiten Zeitpunkt berechnete Freiheitsgrad kleiner als der erste Schwellenwert, aber größer als der zweite Schwellenwert ist. Die Bestimmung und/oder Überwachung der Soll Trajektorie wird insbesondere abgebrochen, wenn der zu dem zweiten Zeitpunkt berechnete Freiheitsgrad kleiner als der zweite Schwellenwert ist. In diesem Fall kann die Bestimmung der Soll-Trajektorie völlig neu aufgesetzt werden.

Bevorzugt werden zur Bestimmung und/oder Überwachung der Soll-Trajektorie nur die Freiheitsgrade derjenigen Gitterzellen herangezogen, durch welche die aktuelle Soll-Trajektorie verläuft oder durch welche das Fahrzeug bei seiner Fahrt auf der Soll-Trajektorie noch zu fahren hat. Beispielsweise kann anhand der Freiheitsgrade der Gitterzellen, durch welche die Soll-Trajektorie verläuft und durch welche das Fahrzeug aktuell noch nicht gefahren ist, jeweils zum ersten und zum zweiten Zeitpunkt die Bestimmung und/oder Überwachung der Soll-Trajektorie erfolgen. Es ist auch möglich, nur den Freiheitsgrad derjenigen Gitterzelle für die Bestimmung und/oder Überwachung der Soll-Trajektorie zu berücksichtigen, in welcher sich das Fahrzeug aktuell aufhält. Die im Folgenden beschriebenen Summen enthalten in diesem Fall nur einen Summanden oder entsprechen dem Freiheitgrad dieser Gitterzelle zum Zeitpunkt t=0 oder t1

Beispielsweise kann die Summe der Freiheitsgrade der Gitterzellen, durch welche die Soll-Trajektorie verläuft und durch welche das Fahrzeug aktuell noch nicht gefahren ist, jeweils zum ersten und zum zweiten Zeitpunkt berechnet werden. Abhängig von der Summe der Freiheitsgrade zum ersten Zeitpunkt können dann der erste und der zweite Schwellenwert (z.B. als entsprechender Prozentsatz dieser Summe) erstellt werden. Wenn die Summe der Freiheitsgrade zum zweiten Zeitpunkt größer als dieser erste Schwellenwert ist, wird die Soll-Trajektorie nicht verändert. Die Soll-Trajektorie des Fahrzeugs kann jedoch verändert werden (z.B. indem aus der vorher bestimmten Menge der fahrbaren Trajektorie eine bessere ausgewählt wird), wenn die Summe der Freiheitsgrade zum zweiten Zeitpunkt kleiner als der erste Schwellenwert, aber größer als der zweite Schwellenwert ist. Wenn dagegen die Summe der Freiheitsgrade zum zweiten Zeitpunkt kleiner als der zweite Schwellenwert ist, wird die Bestimmung und/oder Überwachung der Soll-Trajektorie abgebrochen und insbesondere völlig neu aufgesetzt, indem beispielsweise die Menge aller möglichen fahrbaren Trajektorien ausgehend von den aktuell geltenden Randbedingungen neu erstellt wird, um dann aus dieser Menge die am besten geeignete Soll-Trajektorie des Fahrzeugs zu bestimmen.

Gemäß einer bevorzugten erfindungsgemäßen Ausführungsform wird die Menge aller möglichen fahrbaren Trajektorien des Fahrzeugs derart bestimmt, dass jede Trajektorie dieser Menge vorgegebene physikalische, infrastrukturelle und/oder gesetzliche Anforderungen erfüllt.

Dabei werden unter den physikalischen Anforderungen bestimmte Bedingungen verstanden, welche einzuhalten sind. Beispielsweise wird die Einhaltung der, Kamm'schen Kreis'-Bedingung vorausgesetzt sowie Totzeiten der Bremse bzw. Aktuatorik oder Lenk- und Getriebeübersetzung, die Lenkwinkeländerungsgeschwindigkeit oder maximale Beschleunigungen oder Verzögerungen des Fahrzeugs bei einer fahrbaren Trajektorien berücksichtigt. Infrastrukturelle und gesetzliche Anforderungen entsprechen beispielsweise einer einzuhaltenden Maximalgeschwindigkeit sowie einem einzuhaltenden Sicherheitsabstand zu einem anderen Verkehrsteilnehmer.

Zusammenfassend wird insbesondere die Soll-Trajektorie für das Fahrzeug vorgegeben und abhängig von den kollisionsfreien Trajektorien, welche insbesondere über den gemeinsamen Zustandsraum bestimmt werden, wird bestimmt oder überwacht, ob diese vorgegebene Soll-Trajektorie beibehalten werden kann.

Im Rahmen der vorliegenden Erfindung wird auch eine Vorrichtung zum Bestimmen und/oder Überwachen einer Soll-Trajektorie eines Fahrzeugs nach Anspruch 9 bereitgestellt.

Die Vorteile der erfindungsgemäßen Vorrichtung entsprechen im Wesentlichen den Vorteilen des erfindungsgemäßen Verfahrens, welche vorab im Detail ausgeführt sind, so dass hier auf eine Wiederholung verzichtet wird.

Schließlich wird im Rahmen der vorliegenden Erfindung ein Fahrzeug bereitgestellt, welches eine erfindungsgemäße Vorrichtung umfasst.

Die vorliegende Erfindung ist insbesondere für Kraftfahrzeuge geeignet. Selbstverständlich ist die vorliegende Erfindung nicht auf Fahrzeuge beschränkt, da die vorliegende Erfindung auch bei Schiffen, Flugzeugen sowie gleisgebundenen oder spurgeführten Fahrzeugen einsetzbar ist.

Im Folgenden wird die vorliegende Erfindung anhand bevorzugter erfindungsgemäßer Ausführungsformen mit Bezug zu den Figuren im Detail beschrieben.

In Fig. 1 sind bestimmte Komponenten zur erfindungsgemäßen Überwachung der Soll-Trajektorie eines Fahrzeugs dargestellt.

In Fig. 2 ist die Unterscheidung zwischen kollisionsbehafteten und kollisionsfreien Trajektorien dargestellt.

In Fig. 3 sind die Freiheitsgrade für verschiedene Zellen grafisch dargestellt.

In Fig. 4 ist eine Soll-Trajektorie zusammen mit kollisionsfreien und kollisionsbehafteten Trajektorien dargestellt.

In Fig. 5 sind die Freiheitsgrade der Gitterzellen zusammen mit der Soll-Trajektorie dargestellt.

In Fig. 6 sind die Freiheitsgrade der Gitterzellen nach Änderungen der Randbedingungen zusammen mit der vorherigen Soll-Trajektorie und der aktuellen Soll-Trajektorie dargestellt.

In Fig. 7 ist schematisch ein erfindungsgemäßes Fahrzeug mit einer erfindungsgemäßen Vorrichtung dargestellt.

In Fig. 8 ist ein Flussplan eines Verfahrens dargestellt

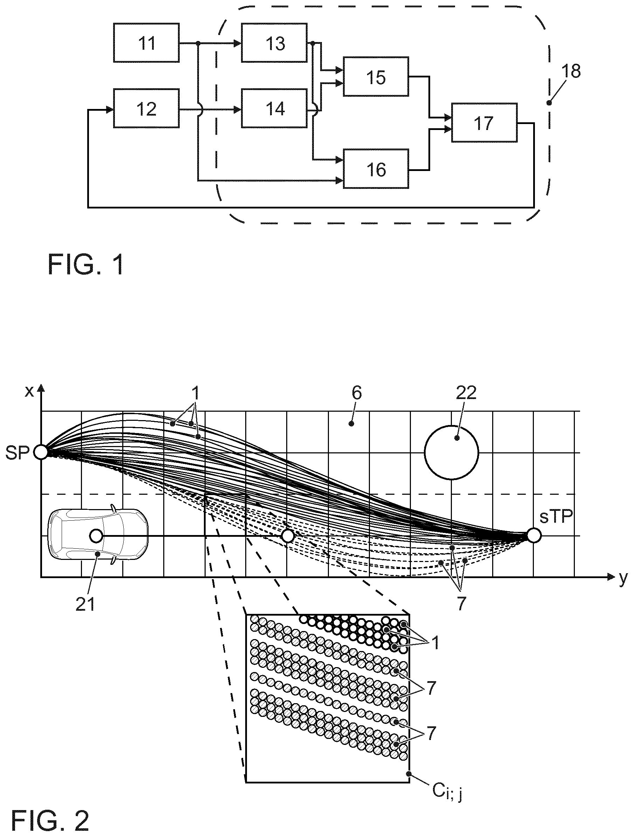

In Fig. 1 ist ein erfindungsgemäßer Überwachungsprozess 18 dargestellt, welcher einen Gitterkarten-Generator 13, einen Trajektorien-Generator 14, einen Zustandsraum-Generator 15, einen Belegtheitskarten-Generator 16 und einen Generator 17 für den gemeinsamen Zustandsraum umfasst. Der Überwachungsprozess 18 arbeitet wie folgt: In einem ersten Schritt wird eine Gitterkarte als eine quantisierte Darstellung der Umwelt oder eines Umwelt-Modells 11 von dem Gitterkarten-Generator 13 erstellt. Anschließend berechnet der Trajektorien-Generator 14 die Menge der fahrbaren Trajektorien, welche den Startpunkt und einen sicheren Endpunkt für das betrachtete Fahrzeug verbinden. Dazu erhält der Trajektorien-Generator 14 von der Manöverplanung 12 die aktuelle Soll-Trajektorie des Fahrzeugs, anhand welcher der Trajektorien-Generator 14 den Startpunkt und den Endpunkt extrahieren kann. Der Zustandsraum-Generator 15 erstellt auf Basis der berechneten Menge von Trajektorien und der Gitterkarte den Zustandsraum für das Fahrzeug. Der Belegtheitskarten-Generator 16 berechnet aus dem Umgebungsmodell 11 eine Belegtheitskarte, welche die Hindernisse in der Umgebung des Fahrzeugs repräsentiert. Diese Belegtheitskarte wird kontinuierlich aktualisiert. Schließlich kombiniert der Generator 17 den gemeinsamen Zustandsraum aus dem Zustandsraum und der Belegtheitskarte. Dabei führt der Generator 17 bei jeder Aktualisierung der Belegtheitskarte oder bei jeder Änderung der Soll-Trajektorien bzw. Referenz-Trajektorien von beteiligten Verkehrsteilnehmern eine Kollisionsprüfung durch, um aus allen fahrbaren Trajektorien die kollisionsfreien Trajektorien des Fahrzeugs zu ermitteln. Daher beschreibt der gemeinsame Zustandsraum zu jedem Zeitschritt die aktuellen Eigenschaften der jeweiligen Gitterzellen.

Während die Generatoren 13-15 in der Regel nur zum Beginn (wenn sich das Fahrzeug am Startpunkt seiner Soll-Trajektorie befindet) einmalig arbeiten, um die Gitterkarte, alle fahrbaren Trajektorien und den Zustandsraum zu erstellen, arbeiten die Generatoren 16 und 17 bei jeder Änderung von Eingaben, welche die Belegtheitskarte oder den gemeinsamen Zustandsraum verändern könnten. Der Überwachung-Algorithmus 18 bewertet oder überwacht die Soll-Trajektorie des Fahrzeugs jeweils auf dem aktualisierten gemeinsamen Zustandsraum zu jedem Zeitschritt innerhalb der definierten Manöverdauer (Zeitdauer, in welchem sich das Fahrzeug entlang seiner Soll-Trajektorie bewegt). Wenn der Überwachungsprozess bzw. Überwachung-Algorithmus 18 anhand der Berechnung des Freiheitsgrads erkennt, dass die Soll-Trajektorie des Fahrzeugs angepasst oder vollständig neu bestimmt werden muss, wird dies der Manöverplanung 12 mitgeteilt.

Mit Hilfe der Fig. 2 soll die Berechnung des Freiheitsgrades und die Bestimmung und/oder Überwachung der Soll-Trajektorie für ein Fahrzeug beispielhaft erläutert werden.

Bei der in Fig. 2 dargestellten Situation startet das Fahrzeug bzw. Ego-Fahrzeug an dem Startpunkt SP und versucht den sicheren Zielpunkt sTP auf der anderen Fahrbahn zu erreichen, um eine Kollision mit dem Hindernis 22 zu vermeiden. Neben dem Fahrzeug fährt auf der anderen Fahrbahn ein weiteres Fahrzeug 21, welches somit die möglichen Lösungen (Trajektorien) für das Fahrzeug zum Erreichen des Zielpunkts sTP beschränkt. In Fig. 2 sind alle möglichen fahrbaren Trajektorien des Fahrzeugs vom Startpunkt SP zum Zielpunkt sTP dargestellt. Dabei wird zwischen den kollisionsfreien Trajektorien 1, welche in Fig. 2 weiter oben dargestellt sind, und den kollisionsbehafteten Trajektorien 7 unterschieden. Wenn das Fahrzeug entlang einer der kollisionsbehafteten Trajektorien 7 fahren würde, würde es entsprechend den aktuellen Annahmen über das weitere Fahrzeug 21 zu einer Kollision mit dem weiteren Fahrzeug 21 kommen. In Fig. 2 sind beispielhaft die Punkte derjenigen Trajektorien im Detail dargestellt, welche durch eine Gitterzelle $c_{i,j}$ verlaufen.

Tabelle 2

| u | v [m/s] | $\psi$ [°] | t [s] |
|---|---|---|---|
| 122 | 20,00 | 5,02 | 2,21 |
| 122 | 20,05 | 5,01 | 2,22 |
| 122 | 20,10 | 5,00 | 2,23 |

(fortgesetzt)

| u | v [m/s] | ψ [°] | t [s] |
|---|---|---|---|
| … | … | … | … |
| | | | |
| … | … | … | … |
| | | | |

Die Tabelle 2 ist quasi eine Aktualisierung der weiter oben stehenden Tabelle 1, wobei in Tabelle 2 die aktuell als kollisionsbehaftet eingestuften Trajektorien markiert oder gestrichen sind. Ausgehend von der Tabelle 2 werden nun für die Eigenschaften v, ψ und t ein neues Minimum und ein neues Maximum bestimmt, wodurch sich ein neuer oder aktualisierter Freiheitsgrad berechnen lässt. Dieses Vorgehen lässt sich für alle Gitterzellen oder zumindest für diejenigen Gitterzellen, durch welche eine Trajektorie verläuft, durchführen.

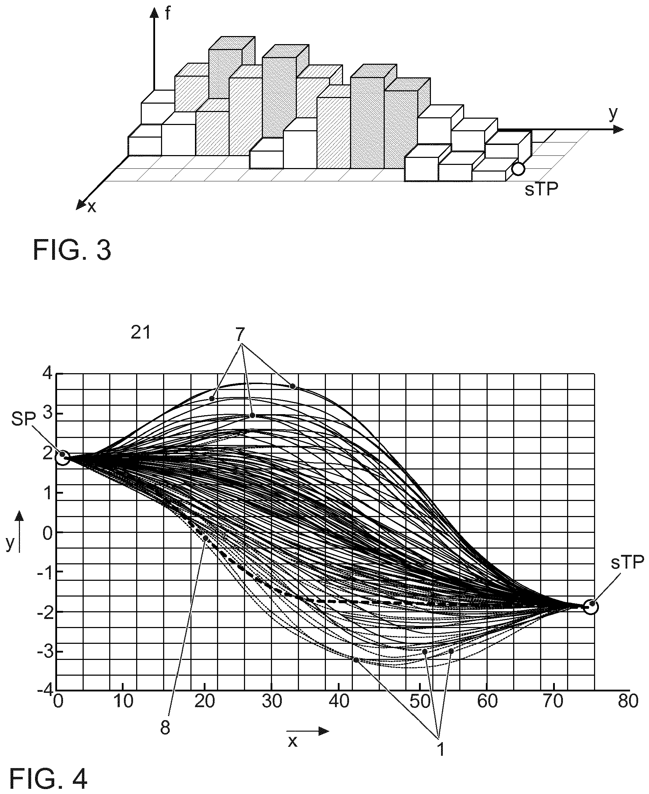

In Fig. 3 ist die Verteilung des Freiheitsgrads f über den Gitterzellen für das Fahrzeug zum Beginn des Manövers (d.h. das Fahrzeug befindet sich am Startpunkt) zum Zeitpunkt t=0 dargestellt.

In ähnlicher Weise kann jegliche Änderung in den Vorgaben (beispielsweise eine Änderung der Soll-Trajektorien des weiteren Fahrzeugs 21 oder eine Änderung im Umgebungsmodell) den Maximalwert oder Minimalwert der Eigenschaften der jeweiligen Gitterzelle und damit den Freiheitsgrad für das Fahrzeug verändern. Anhand der Veränderung des Freiheitsgrads kann jegliche Veränderung beispielsweise in der Position oder in den Abmaßen von statischen Hindernissen oder in den Referenz-Trajektorien der involvierten Verkehrsteilnehmer berücksichtigt und bewertet werden.

Wenn sich also das Fahrzeug zu einem Zeitpunkt t (> 0) innerhalb einer Gitterzelle $u_{i,j}$ befindet, kann überprüft werden, ob sich der aktuelle Freiheitsgrad $f_{ui,j}(t)$ von dieser Gitterzelle gegenüber dem Freiheitsgrad der Gitterzelle $f_{ui,j}(t=0)$ zum Zeitpunkt t=0 verändert hat. Es kann auch überprüft werden, ob sich die Summe der aktuellen Freiheitsgrade derjenigen Gitterzellen, durch welche das Fahrzeug auf seiner Fahrt entlang der Soll-Trajektorie noch zu fahren hat, von der Summe der Freiheitsgrade zum Zeitpunkt t=0 dieser Gitterzellen unterscheidet. Wenn dies der Fall ist, gibt es zwei Möglichkeiten:

- Der aktuelle Freiheitsgrad (Summe der aktuellen Freiheitsgrade) ist größer als der Freiheitsgrad (Summe der Freiheitsgrade) zum Beginn des Manövers. Dieser Fall, welcher beispielsweise auftreten kann, wenn das weitere Fahrzeug 21 in Fig. 2 langsamer als geplant oder weiter rechts als geplant fährt, ist unkritisch, da sich die Handlungsmöglichkeiten für das Ego-Fahrzeug sogar vergrößert haben.
- Der aktuelle Freiheitsgrad (Summe der aktuellen Freiheitsgrade) ist kleiner als der Freiheitsgrad (Summe der Freiheitsgrade) zum Beginn des Manövers. Dieser üblichere Fall ist kritischer zu bewerten, da sich die Handlungsmöglichkeiten für das Ego-Fahrzeug verringert haben. In diesem Fall muss zwischen folgenden Reaktionen ausgewählt werden:

  ◦ Der aktuelle Plan kann fortgesetzt werden bzw. die aktuelle Soll-Trajektorie des Fahrzeugs kann beibehalten werden, oder
  ◦ Der aktuelle Plan kann angepasst werden bzw. die aktuelle Soll-Trajektorie des Fahrzeugs kann verändert werden, indem beispielsweise aus der vorher bestimmten Menge der fahrbaren Trajektorien eine bessere ausgewählt wird, oder
  ◦ der aktuelle Plan wird abgebrochen, da sich die Randbedingungen bzw. Handlungsmöglichkeiten für das Ego-Fahrzeug drastisch verringert haben. In diesem Fall wird die Bestimmung der Soll-trajektorie beispielsweise völlig neu aufgesetzt, indem z.B. ausgehend von der aktuellen Position des Fahrzeugs ein Startpunkt und ausgehend von den aktuellen Randbedingungen ein neuer sicherer Zielpunkt bestimmt werden, um ausgehend davon die Menge der fahrbaren Trajektorien und eine neue Soll-Trajektorie zu bestimmen.

Die Entscheidung, welche der drei möglichen Reaktionen gewählt wird, basiert erfindungsgemäß auf den folgenden beiden Schwellenwerten

- $\varsigma_{Cont}$ für Planfortsetzung, und
- $\varsigma_{Can}$ für Planabbruch.

Dabei wird

- der aktuelle Plan fortgesetzt bzw. die aktuelle Soll-Trajektorie des Fahrzeugs beibehalten, wenn die folgende Glei-

chung (2) erfüllt ist.

$$\varsigma_{Cont}(Summe(f_{ui,j}(t=0))) < Summe(f_{ui,j}(t)) \qquad (2)$$

- der aktuelle Plan angepasst bzw. die aktuelle Soll-Trajektorie des Fahrzeugs verändert, wenn die folgende Gleichung (3) erfüllt ist.

$$\varsigma_{Can}(Summe(f_{ui,j}(t=0))) \leq Summe(f_{ui,j}(t)) \leq \varsigma_{Cont}(Summe(f_{ui,j}(t=0))) \qquad (3)$$

- der aktuelle Plan abgebrochen, wenn die folgende Gleichung (4) erfüllt ist.

$$Summe(f_{ui,j}(t)) < \varsigma_{Can}(Summe(f_{ui,j}(t=0))) \qquad (4)$$

Die beiden Schwellenwerte, mit denen die Summe der aktuellen Freiheitsgrade der Gitterzellen, durch welche das Fahrzeug auf seiner Fahrt entlang der Soll-Trajektorie noch zu fahren hat, verglichen wird, sind also abhängig von der Summe der Freiheitsgrade dieser Gitterzelle zum Zeitpunkt t=0.

Im Folgenden wird die vorliegende Erfindung anhand eines konkreten Beispiels beschrieben.

Tabelle 3

| Parameter | Ego-Fahrzeug | Fahrzeug 21 | Hindernis 22 |
|---|---|---|---|
| Zentrumsposition (x,y) | (0; 1,87) | (0; -1,87) | (30; 1,87) |
| Länge/Breite [m] | 3,8/ 1,8 | 3,8/ 1,8 | 3,8/ 1,8 |
| Geschwindigkeit [m/s] | 25 | 15 | 0 |
| sTP (x;y) | (75; -1,87) | (27, -1,87) | (30, 1,87) |
| sTP (v; $\psi$; t) | (25, 0, 3) | (3, 0, 3) | (0, 0, 3) |

In Tabelle 3 sind einige Angaben des Ego-Fahrzeugs, des anderen Verkehrsteilnehmers 21 und des Hindernisses 22 angegeben. Neben der in der vierten Zeile angegebenen aktuellen Geschwindigkeit (d.h. Zeitpunkt t = 0) der Verkehrsteilnehmer kann in der vorletzten Zeile die Position des sicheren Endpunkts des jeweiligen Verkehrsteilnehmers und in der letzten Zeile weitere Eigenschaften des jeweiligen Verkehrsteilnehmers im sicheren Endpunkt sTP entnommen werden. Da der sichere Endpunkt von jedem Verkehrsteilnehmer laut der letzten Zeile nach 3 s erreicht wird, beträgt die so genannte Manöverdauer 3 s.

In der Fig. 4 sind alle fahrbaren Trajektorien 1, 7 des Ego-Fahrzeugs dargestellt, wobei zwischen kollisionsbehafteten Trajektorien 7 und kollisionsfreien Trajektorien 1 unterschieden wird. Zusätzlich ist in Fig. 4 die Soll-Trajektorie 8 des Ego-Fahrzeugs abgebildet. Die Unterteilung in kollisionsbehaftete Trajektorien 7 und kollisionsfreien Trajektorien 1 sowie die Bestimmung der Soll-Trajektorie 8 erfolgt abhängig von den in der Tabelle 3 angegebenen Merkmalen der weiteren Verkehrsteilnehmer (Fahrzeug 21 und Hindernis 22). Diese Merkmale oder Eigenschaften der anderen Verkehrsteilnehmer 21, 22 werden entweder abhängig von Daten ermittelt, welche von Sensoren des Ego-Fahrzeugs erfasst werden, oder über Funkmittel des Ego-Fahrzeugs empfangen, wenn beispielsweise das Fahrzeug 21 seine Soll-Trajektorie über Funk (Car2Car-Kommunikation) überträgt.

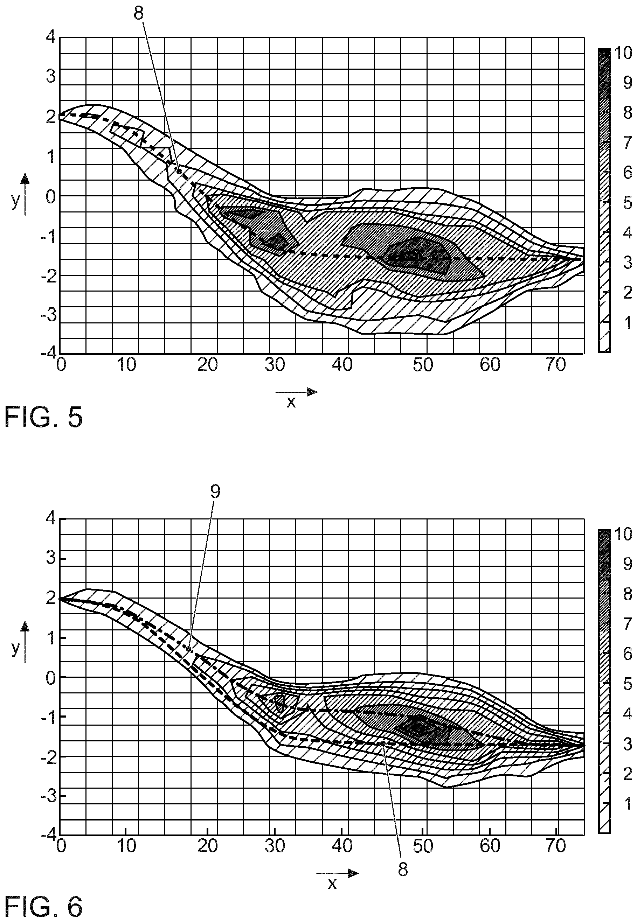

Die Gridkarte umfasst bei der Fig. 4 oder bei den folgenden Figuren 5 und 6 20 x 20 Gitterzellen, welche jeweils einer Länge von 3,75 m und eine Breite von 0,4 m in der realen Umwelt entsprechen. Die Gesamtzahl der fahrbaren Trajektorien zwischen dem Startpunkt SP und dem sicheren Zielpunkt sTP beträgt 4050. Diese Trajektorien erfüllen die kinematischen, dynamischen und zeitlichen Anforderungen, wobei die zeitlichen Anforderungen bedeuten, dass das Ego-Fahrzeug bei einer Fahrt entlang einer beliebigen fahrbaren Trajektorie eine Zeit von 3 s benötigt. Der in Fig. 4 dargestellte gemeinsame Zustandsraum wird ausgehend von dem Zustandsraum des Ego-Fahrzeugs erzeugt, indem anhand einer Kollisionsüberprüfung alle Trajektorien, welche mit statischen Hindernissen (in diesem Beispiel mit dem Hindernis 22) zu einer Kollision führen würden, als kollisionsbehaftete Trajektorien 7 eingestuft werden. Darüber hinaus werden die Soll-Trajektorien der dynamischen Hindernisse (in diesem Fall des Fahrzeugs 21) in Form einer Belegtheitskarte berücksichtigt. Bei dem dargestellten Beispiel sind 3091 Trajektorien kollisionsbehaftet und die verbleibenden 959 Trajektorien 1 kollisionsfrei. Diese kollisionsfreien Trajektorien 1 definieren den Umfang von möglichen Aktionen, um mit dem Ego-Fahrzeug den sicheren Endpunkt sTP zu erreichen. Ausgehend von dem so berechneten gemeinsamen Zustandsraum kann der Freiheitsgrad $f_{i,j}$ für jede individuelle Gitterzelle $c_{i,j}$ berechnet werden. Die Verteilung dieser Freiheitsgrade über die Gitterzellen für das Ego-Fahrzeug zum Beginn des Fahrmanövers (t = 0) ist in Fig. 5 dargestellt. Man erkennt dass die Soll-Trajektorie 8 durch Gitterzellen verläuft, welche einen vergleichsweise hohen Freiheitsgrad aufweisen. Beispielsweise kann die Soll-Trajektorie derjenigen kollisionsfreien Trajektorie entsprechen, welche die geringste Summe der Freiheitsgrade aufweist, wenn die Freiheitsgrade derjenigen Gitterzellen aufsummiert werden, durch welche die jeweilige Trajektorie verläuft.

Beim weiteren erfindungsgemäßen Vorgehen werden die Freiheitsgrade zum Zeitpunkt t=0 mit den Freiheitsgraden zum jeweils aktuellen Zeitpunkt verglichen. Dazu werden zum jeweiligen Zeitpunkt die Freiheitsgrade derjenigen Gitterzellen, durch welche die Soll-Trajektorie 8 verläuft (oder besser durch welche das Fahrzeug auf seiner Fahrt entlang der Soll-Trajektorie noch fahren muss), zu einer Summe aufsummiert, welche dann mit einer Ausgangssumme verglichen wird. Zur Berechnung der Ausgangssumme werden die Freiheitsgrade derjenigen Gitterzellen, durch welche die Soll-Trajektorie 8 verläuft (oder besser durch welche das Fahrzeug auf seiner Fahrt entlang der Soll-Trajektorie noch fahren muss), zum Zeitpunkt t=0 aufsummiert. Das Bestimmen und/oder Überwachen der Soll-Trajektorie des Fahrzeugs erfolgt abhängig von den beiden vorab bereits beschriebenen Schwellenwerten $\varsigma_{Cont}$ und $\varsigma_{Can}$, welche abhängig von der Ausgangssumme berechnet werden. Im dargestellten Beispiel beträgt der Schwellenwert $\varsigma_{Cont}$ 2/3 der Ausgangssumme und der Schwellenwert $\varsigma_{Cont}$ beträgt 1/3 der Ausgangssumme.

Es wird angenommen, dass sich das Fahrzeug 21 im Gegensatz zu der Annahme, welche zur Berechnung des in Fig. 4 dargestellten gemeinsamen Zustandsraums zugrunde lag, nicht kooperativ verhält. Laut der ursprünglichen Annahme wurde vorausgesetzt, dass das Fahrzeug 21 seine anfängliche Geschwindigkeit von 15 m/s auf 3 m/s absenkt. Nun erkennt das erfindungsgemäße Verfahren, dass das Fahrzeug stattdessen seine anfängliche Geschwindigkeit von 15 m/s beibehält. Zum Zeitpunkt t = 0,3 s ergibt sich der in Fig. 6 dargestellte gemeinsame Zustandsraum. Man erkennt, dass sich die Freiheitsgrade der Gitterzellen, durch welche die Soll-Trajektorie 8 verläuft, im Vergleich zu Fig. 5 stark verschlechtert haben. Während der gemittelte Ausgangs-Freiheitsgrad (Summe der Freiheitsgrade zum Zeitpunkt t=0 geteilt durch die Anzahl der die Summe bildenden Gitterzellen) mit 2,88 berechnet wurde, beträgt der aktuelle gemittelte Freiheitsgrad derjenigen Gitterzellen, durch welche die Soll-Trajektorie 8 verläuft, zum Zeitpunkt t= 0,3 s nur noch 1,87. Damit ist der aktuelle gemittelte Freiheitsgrad kleiner als 2/3 des gemittelten Ausgangs-Freiheitsgrads (2/3 * 2,88 = 1,92), aber immer noch größer als 1/3 des gemittelten Ausgangs-Freiheitsgrads (1/3 * 2,88 = 0,96). Daher wird erfindungsgemäß eine Plananpassung durchgeführt, welche zu der in Fig. 6 dargestellten neuen Soll-Trajektorie für das Ego-Fahrzeug führt. Man erkennt dass die neue Soll-Trajektorie 9 im Vergleich zur alten Soll-Trajektorie 8 weiter oben verläuft, um einen Zusammenstoß mit dem Fahrzeug 21 zu vermeiden.

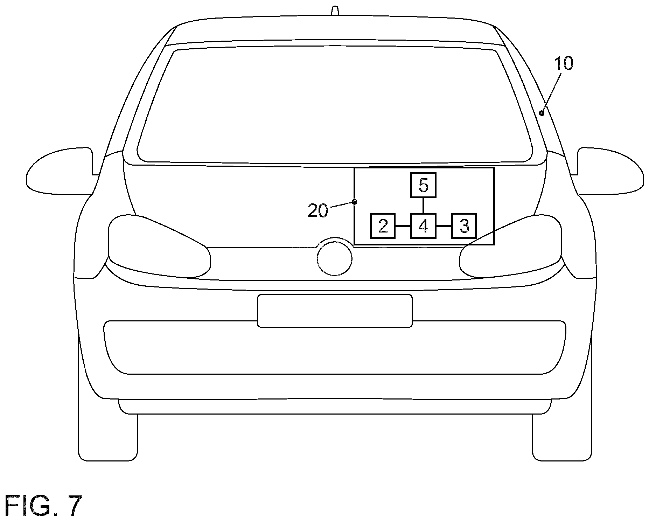

In Fig. 7 ist schematisch ein erfindungsgemäßes Fahrzeug 10 mit einer erfindungsgemäßen Vorrichtung 20 dargestellt. Dabei umfasst die erfindungsgemäße Vorrichtung 20 neben einer Steuerung 4 einen LIDAR-Sensor 2, eine Kamera 3 und eine Kommunikationseinrichtung 5. Mit Hilfe des Sensors 2 und der Kamera 3 wird die Umgebung des Ego-Fahrzeugs 10 erfasst. Informationen über Pläne (z.B. geplante Soll-Trajektorien) von weiteren Fahrzeugen, welche die Planung und die Überprüfung der Soll-Trajektorie des Ego-Fahrzeugs 10 beeinflussen könnten, können auch über die Kommunikationseinrichtung 5 beispielsweise anhand einer Car2Car-Kommunikation von dem Ego-Fahrzeug 10 empfangen werden.

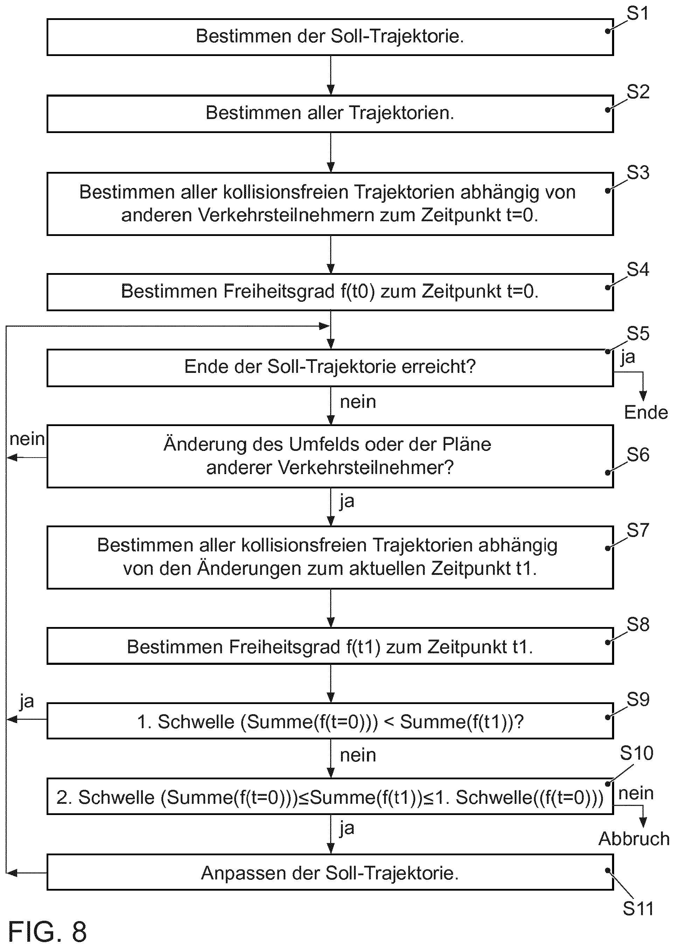

In Fig. 8 ist eine Ausführungsform des Verfahrens als Flussplan dargestellt. Dieses Verfahren entspricht nicht der beanspruchten Erfindung, ist aber nützlich, um die Erfindung zu verstehen.

Im Schritt S1 wird eine Soll-Trajektorie des Ego-Fahrzeugs bestimmt, während im Schritt S2 alle möglichen fahrbaren Trajektorien für das Ego-Fahrzeug bestimmt werden, um vom Startpunkt zum sicheren Zielpunkt zu gelangen. Im Schritt S3 werden aus der endlichen Menge aller Trajektorien, welche im Schritt S2 bestimmt werden, zum Zeitpunkt t=0 die kollisionsfreien Trajektorien bestimmt, wobei andere Verkehrsteilnehmer (z.B. andere Fahrzeuge oder Hindernisse), welche zu einer Kollision mit dem Ego-Fahrzeug führen könnten, berücksichtigt werden. Ausgehend von diesen kollisionsfreien Trajektorien werden zumindest die Freiheitsgrade in den Gitterzellen bestimmt, welche zumindest einen Punkt von der Soll-Trajektorie umfassen. Die Freiheitsgrade der Gitterzellen, welche zumindest einen Punkt von der Soll-Trajektorie umfassen, werden zu einer Ausgangs-Summe aufsummiert, um eine Vergleichsgrundlage für die folgenden Zeitpunkte zu bestimmen.

Wenn die Abfrage S5 mit ja beantwortet wird, hat das Ego-Fahrzeug das Ende der Soll-Trajektorie (d.h. den sicheren Zielpunkt) erreicht und das Verfahren endet. Wenn dagegen die Abfrage S5 mit Nein beantwortet wird, wird in der folgenden Abfrage S6 überprüft, ob sich Änderungen im Umfeld des Ego-Fahrzeugs oder bei den Plänen der anderen Verkehrsteilnehmer ergeben haben. Wenn dies nicht der Fall ist, springt das Verfahren zur Abfrage S5 zurück. Wenn dies dagegen der Fall ist, werden abhängig von diesen Änderungen ausgehend von der in Schritt S2 bestimmten Trajektorienmenge die kollisionsfreien Trajektorien zum aktuellen Zeitpunkt t1 bestimmt. Dazu wird ausgehend von den im Schritt S2 bestimmten Trajektorien all diejenigen Trajektorien bestimmt, welche abhängig von den aktuellen Plänen der anderen Verkehrsteilnehmer (einschließlich der Hindernisse) kollisionsbehaftet sind, wodurch (indirekt) auch die kollisionsfreien Trajektorien bestimmt werden. Anhand der im Schritt S7 bestimmten kollisionsfreien Trajektorien wird wiederum der Freiheitsgrad zumindest für diejenigen Gitterzellen bestimmt, durch welche die Soll-Trajektorie des Ego-Fahrzeugs verläuft. Dadurch kann die Summe der Freiheitsgrade der Gitterzellen, durch welche die Soll-Trajektorie verläuft, zum Zeitpunkt t1 im Schritt S8 bestimmt werden.

Im Schritt S9 wird ausgehend von der Ausgangs-Summe ein erster Schwellenwert berechnet, welcher mit der Summe der Freiheitsgrade der Gitterzellen, durch welche die Soll-Trajektorie verläuft, zum Zeitpunkt t1 verglichen wird. Beispielsweise kann der erste Schwellenwert ein bestimmter Prozentsatz (z.B. zwischen 50 % und 90 %) der Ausgangs-Summe sein. Wenn dieser erste Schwellenwert kleiner als die Summe der Freiheitsgrade der Gitterzellen, durch welche die Soll-Trajektorie verläuft, zum Zeitpunkt t1 ist, kann der aktuelle Plan weiterverfolgt werden (d.h. die Soll-Trajektorie bleibt unverändert) und das Verfahren springt zum Schritt S5 zurück. Wenn dagegen die Summe der Freiheitsgrade der Gitterzellen, durch welche die Soll-Trajektorie verläuft, zum Zeitpunkt t1 kleiner oder gleich diesem ersten Schwellenwert ist, wird im folgenden Schritt S10 ein zweiter Schwellenwert ausgehend von der Ausgangs-Summe berechnet. Dieser zweite Schwellenwert kann ebenfalls ein bestimmter Prozentsatz (z.B. zwischen 20 % und 50 %) der Ausgangs-Summe sein. Wenn die Summe der Freiheitsgrade der Gitterzellen, durch welche die Soll-Trajektorie verläuft, zum Zeitpunkt t1 zwar kleiner oder gleich dem ersten Schwellenwert, aber größer oder gleich dem zweiten Schwellenwert ist, wird im Schritt S11 die Soll-Trajektorie angepasst bzw. verändert. Diese Änderung kann beispielsweise anhand der aktuellen Freiheitsgrade aller Gitterzellen vorgenommen werden. Wenn dagegen die Summe der Freiheitsgrade der Gitterzellen, durch welche die Soll-Trajektorie verläuft, zum Zeitpunkt t1 auch kleiner als der zweite Schwellenwert ist, bricht das erfindungsgemäße Verfahren ab, da ein neuer Plan (d.h. eine neue Soll-Trajektorie) zu erstellen ist, da sich die Randbedingungen, welche zur Erstellung der ursprünglichen Soll-Trajektorie (zum Zeitpunkt t=0) galten, zu stark verändert haben. In diesem Fall kann ausgehend von der aktuellen Position des Ego-Fahrzeugs und von den aktuellen Kenntnissen der Umgebung (z.B. Position von Hindernissen, Soll-Trajektorien von umgebenden Verkehrsteilnehmern) eine neue Soll-Trajektorie bestimmt werden, so dass das erfindungsgemäße Verfahren quasi beim Schritt S1 neu startet.

## Patentansprüche

1. Verfahren zum automatischen Bestimmen und/oder Überwachen einer Soll-Trajektorie (8) für ein Fahrzeug (10), mit welcher ein Startpunkt (SP), der der aktuellen Position des Fahrzeugs (10) entspricht, mit einem Zielpunkt (sTP) verbunden wird, umfassend:

    Bestimmen von verschiedenen Trajektorien (1, 7) des Fahrzeugs (10), welche den Startpunkt (SP) mit dem Zielpunkt (sTP) verbinden,
    Erfassen von jeweils einer weiteren Soll-Trajektorie für Verkehrsteilnehmer (21, 22),
    wobei jede der weiteren Soll-Trajektorien den Startpunkt des jeweiligen Verkehrsteilnehmers (21) mit einem dem jeweiligen Verkehrsteilnehmer (21; 22) entsprechenden Zielpunkt verbindet,
    Bestimmen derjenigen der Trajektorien des Fahrzeugs (10) als kollisionsfreie Trajektorien (1), welche nicht zu einer Kollision mit einem der weiteren Verkehrsteilnehmer (21, 22) führen, wenn sich der jeweilige Verkehrsteilnehmer (21; 22) auf seiner Soll-Trajektorie bewegt, und
    Bestimmen und/oder Überwachen der Soll-Trajektorie (8) des Fahrzeugs (1) abhängig von den kollisionsfreien Trajektorien (1) des Fahrzeugs (10),
    wobei ausgehend von den kollisionsfreien Trajektorien (1) des Fahrzeugs (10) für Gitterzellen ($c_{i,j}$) einer Gitterkarte einer Fahrbahn (6), auf welcher das Fahrzeug (10) fährt, für mindestens eine Eigenschaft von Punkten der kollisionsfreien Trajektorien (1), welche innerhalb der jeweiligen Gitterzelle ($c_{i,j}$) liegen, das Minimum und das Maximum bestimmt werden,
    wobei abhängig von dem Minimum und dem Maximum der mindestens einen Eigenschaft ein Freiheitsgrad bestimmt wird,
    wobei der Freiheitsgrad zu einem ersten Zeitpunkt und zu einem späteren zweiten Zeitpunkt bestimmt wird,
    wobei abhängig von einem Vergleich zwischen dem zu dem zweiten Zeitpunkt bestimmten Freiheitsgrad und mindestens einem Schwellenwert, welcher abhängig von dem zu dem ersten Zeitpunkt bestimmten Freiheitsgrad bestimmt wird, die Soll-Trajektorie (8) des Fahrzeugs (10) bestimmt und/oder überwacht wird,
    wobei die mindestens eine Eigenschaft ausgewählt ist aus einer Gruppe umfassend:

    • eine Geschwindigkeit des Fahrzeugs (10),
    • einer Fahrzeugausrichtung des Fahrzeugs (10), und
    • ein Zeitpunkt, zu welchem sich das Fahrzeug (10) gemäß der jeweiligen Trajektorie (1) in der Gitterzelle ($c_{i,j}$) befindet,

    wobei der Freiheitsgrad derart bestimmt wird, dass der Freiheitsgrad umso größer ist, umso mehr Handlungsmöglichkeiten für das Fahrzeug (10) innerhalb der jeweiligen Gitterzelle ($c_{i,j}$) existieren.

2.  Verfahren nach Anspruch 1,
    **gekennzeichnet durch**,

    Bestimmen einer Belegtheitskarte, welche angibt, ob sich in einer bestimmten Gitterzelle ($c_{i,j}$) einer Gitterkarte einer Fahrbahn (6), auf welcher das Fahrzeug (10) fährt, zu einem bestimmten Zeitpunkt einer der Verkehrsteilnehmer (21, 22) befindet, und
    dass das Bestimmen der kollisionsfreien Trajektorien (1) abhängig von der Belegtheitskarte durchgeführt wird.

3.  Verfahren nach Anspruch 1 oder 2,
    **gekennzeichnet durch**,

    Bestimmen eines Zustandsraums für das Fahrzeug (10), indem ausgehend von den Trajektorien (1, 7) des Fahrzeugs (10) pro Gitterzelle ($c_{i,j}$) einer Gitterkarte einer Fahrbahn (6), auf welcher das Fahrzeug (10) fährt, für mindestens eine Eigenschaft von Punkten der Trajektorien (1, 7), welche innerhalb der jeweiligen Gitterzelle ($c_{i,j}$) liegen, das Minimum und das Maximum bestimmt werden,
    wobei das Bestimmen und/oder Überwachen der Soll-Trajektorie (8) abhängig von dem Zustandsraum durchgeführt wird.

4.  Verfahren nach Anspruch 2 und 3,
    **gekennzeichnet durch**,

    Bestimmen eines gemeinsamen Zustandsraums für das Fahrzeug (10), indem die Belegtheitskarte und der Zustandsraum für das Fahrzeug kombiniert werden, wobei ausgehend von den kollisionsfreien Trajektorien (1) des Fahrzeugs (10) pro Gitterzelle ($c_{i,j}$) für die mindestens eine Eigenschaft von Punkten der kollisionsfreien Trajektorien (1, 7), welche innerhalb der jeweiligen Gitterzelle ($c_{i,j}$) liegen, das Minimum und das Maximum bestimmt werden, und
    wobei das Bestimmen und/oder Überwachen der Soll-Trajektorie (8) abhängig von dem gemeinsamen Zustandsraum durchgeführt wird.

5.  Verfahren nach einem der vorhergehenden Ansprüche,
    **dadurch gekennzeichnet**,

    **dass** der Freiheitsgrad $f_{ci,j}$ für mindestens eine bestimmte Gitterzelle $c_{i,j}$ durch folgende Gleichung (A1) berechnet wird:

    $$f_{ci,j} = \alpha(\Delta V_{ci,j}/v) + \beta(\Delta \Psi_{ci,j}/\psi) + \gamma(\Delta T_{ci,j}/t) \qquad (A1),$$

    wobei $\alpha$, $\beta$ und $\gamma$ Konstanten sind,
    wobei $\Delta V_{ci,j}$ einer Differenz der maximalen Geschwindigkeit und der minimalen Geschwindigkeit innerhalb der Gitterzelle $c_{i,j}$ entspricht,
    wobei $\Delta \psi_{ci,j}$ einer Differenz der maximalen Fahrzeugausrichtung und der minimalen Fahrzeugausrichtung innerhalb der Gitterzelle $c_{i,j}$ entspricht,
    wobei $\Delta T_{ci,j}$ einer Differenz der maximalen Zeit und der minimalen Zeit innerhalb der Zelle $c_{i,j}$ entspricht, und
    wobei v, $\psi$ und t Eigenschaften von Punkten der kollisionsfreien Trajektorien (1) sind, wobei v die Geschwindigkeit, welche das Fahrzeug (10) an dem jeweiligen Punkt beim Befahren einer Trajektorie aufweist, definiert,
    wobei $\psi$ die Fahrzeugausrichtung, welche das Fahrzeug (10) an dem jeweiligen Punkt beim Befahren der Trajektorie aufweist, definiert, und wobei t den Zeitpunkt, zu welchem sich das Fahrzeug (10) an dem jeweiligen Punkt befindet, wenn es die Trajektorie befährt, definiert.

6.  Verfahren nach einem der vorhergehenden Ansprüche,
    **dadurch gekennzeichnet**,

    **dass** abhängig von dem Freiheitsgrad zu dem ersten Zeitpunkt ein erster Schwellenwert und ein zweiter Schwellenwert, welcher kleiner als der erste Schwellenwert ist, bestimmt werden,
    **dass** die Soll-Trajektorie des Fahrzeugs als diejenige Soll-Trajektorie (8) bestimmt wird, welche zum ersten Zeitpunkt berechnet wurde, wenn der zu dem zweiten Zeitpunkt berechnete Freiheitsgrad größer als der erste Schwellenwert ist,

**dass** die Soll-Trajektorie des Fahrzeugs neu berechnet wird, wenn der zu dem zweiten Zeitpunkt berechnete Freiheitsgrad kleiner als der erste Schwellenwert, aber größer als der zweite Schwellenwert ist, und

**dass** die Bestimmung und/oder Überwachung der Soll-Trajektorie (8) abgebrochen wird, wenn der zu dem zweiten Zeitpunkt berechnete Freiheitsgrad kleiner als der zweite Schwellenwert ist.

7. Verfahren nach Anspruch 5 oder 6,
   **dadurch gekennzeichnet,**
   **dass** der Freiheitsgrad für mindestens eine Gitterzelle bestimmt wird, durch welche die Soll-Trajektorie (8) verläuft.

8. Verfahren nach einem der vorhergehenden Ansprüche,
   **gekennzeichnet durch**,

   Vorgeben der Soll-Trajektorie (8) für das Fahrzeug (10), und
   Bestimmen oder Überwachen, ob die vorgegebene Soll-Trajektorie (8) beibehalten wird, abhängig von den kollisionsfreien Trajektorien.

9. Vorrichtung zum Bestimmen und/oder Überwachen einer Soll-Trajektorie (8) eines Fahrzeugs (10), mit welcher ein Startpunkt (SP), der der aktuellen Position des Fahrzeugs (10) entspricht, mit einem Zielpunkt (sTP) verbunden wird,

   wobei die Vorrichtung (20) Erfassungsmittel (2, 3, 5) und Prozessormittel (4) umfasst, wobei die Erfassungsmittel (4) ausgestaltet sind, um von Verkehrsteilnehmern (21, 22) jeweils eine Soll-Trajektorie zu erfassen, wobei jede der weiteren Soll-Trajektorien den Startpunkt des jeweiligen Verkehrsteilnehmers (21; 22) mit einem dem jeweiligen Verkehrsteilnehmer (21) entsprechenden Zielpunkt verbindet,
   wobei die Prozessormittel (4) ausgestaltet sind, um verschiedene Trajektorien (1, 7) des Fahrzeugs, welche den Startpunkt (SP) mit dem Zielpunkt (sTP) verbinden, zu bestimmen, um diejenigen der Trajektorien des Fahrzeugs (10) als kollisionsfreie Trajektorien (1) zu bestimmen, welche nicht zu einer Kollision mit einem der Verkehrsteilnehmer (21, 22) führen, und um die Soll-Trajektorie (8) abhängig von den kollisionsfreien Trajektorien (1) des Fahrzeugs (10) zu bestimmen und/oder zu überwachen,
   wobei die Prozessormittel (4) ausgestattet sind, um
   ausgehend von den kollisionsfreien Trajektorien (1) des Fahrzeugs (10) für Gitterzellen ($c_{i,j}$) einer Gitterkarte einer Fahrbahn (6), auf welcher das Fahrzeug (10) fährt, für mindestens eine Eigenschaft von Punkten der kollisionsfreien Trajektorien (1), welche innerhalb der jeweiligen Gitterzelle ($c_{i,j}$) liegen, das Minimum und das Maximum zu bestimmen,
   wobei die Prozessormittel (4) ausgestattet sind, um
   abhängig von dem Minimum und dem Maximum der mindestens einen Eigenschaft ein Freiheitsgrad zu bestimmen, wobei die Prozessormittel (4) ausgestattet sind, um
   den Freiheitsgrad zu einem ersten Zeitpunkt und zu einem
   späteren zweiten Zeitpunkt bestimmen,
   wobei die Prozessormittel (4) ausgestattet sind, um
   abhängig von einem Vergleich zwischen dem zu dem zweiten Zeitpunkt bestimmten Freiheitsgrad und mindestens einem Schwellenwert, welcher abhängig von dem zu dem ersten Zeitpunkt bestimmten Freiheitsgrad bestimmt wird, die Soll-Trajektorie (8) des Fahrzeugs (10) zu bestimmen und/oder zu überwachen
   wobei die mindestens eine Eigenschaft ausgewählt ist aus einer Gruppe umfassend:

   • eine Geschwindigkeit des Fahrzeugs (10),
   • einer Fahrzeugausrichtung des Fahrzeugs (10), und
   • ein Zeitpunkt, zu welchem sich das Fahrzeug (10) gemäß der jeweiligen Trajektorie (1) in der Gitterzelle ($c_{i,j}$) befindet,

   wobei der Freiheitsgrad derart bestimmt wird, dass der Freiheitsgrad umso größer ist, umso mehr Handlungsmöglichkeiten für das Fahrzeug (10) innerhalb der jeweiligen Gitterzelle ($c_{i,j}$) existieren.

10. Fahrzeug mit einer Vorrichtung (20) nach Anspruch 9.

**Claims**

1. Method for automatically determining and/or monitoring a target trajectory (8) for a vehicle (10) by means of which a starting point (SP) that corresponds to the current position of the vehicle (10) is connected to a target point (sTP), comprising:

   determining different trajectories (1, 7) of the vehicle (10) that connect the starting point (SP) to the target point (sTP),
   detecting a respective further target trajectory for road users (21, 22), wherein each of the further target trajectories connects the starting point of the respective road user (21) to a target point corresponding to the respective road user (21; 22),
   determining those trajectories of the vehicle (10) as collision-free trajectories (1) that do not result in a collision with one of the further road users (21, 22) if the respective road user (21; 22) is moving on the target trajectory thereof, and
   determining and/or monitoring the target trajectory (8) of the vehicle (1) depending on the collision-free trajectories (1) of the vehicle (10),
   wherein the minimum and the maximum are determined based on the collision-free trajectories (1) of the vehicle (10) for grid cells ($c_{i,j}$) of a grid map of a lane (6) on which the vehicle (10) is travelling for at least one property of points of the collision-free trajectories (1) that lie within the respective grid cell ($c_{i,j}$),
   wherein a degree of freedom is determined depending on the minimum and the maximum of the at least one property,
   wherein the degree of freedom is determined at a first point in time and at a later second point in time,
   wherein the target trajectory (8) of the vehicle (10) is determined and/or monitored depending on a comparison between the degree of freedom that is determined at the second point in time and at least one threshold value that is determined depending on the degree of freedom that is determined at the first point in time,
   wherein the at least one property is selected from a group comprising:

   • a speed of the vehicle (10),
   • a vehicle orientation of the vehicle (10), and
   • a point in time at which the vehicle (10) is in the grid cell ($c_{i,j}$) according to the respective trajectory (1),

   wherein the degree of freedom is determined such that the degree of freedom is greater the more possible actions exist for the vehicle (10) within the respective grid cell ($c_{i,j}$).

2. Method according to Claim 1,
   **characterized by**

   determining an occupancy map that indicates whether one of the road users (21, 22) is in a certain grid cell ($c_{i,j}$) of a grid map of a lane (6) in which the vehicle (10) is travelling at a certain point in time, and
   determining the collision-free trajectories (1) depending on the occupancy map.

3. Method according to Claim 1 or 2,
   **characterized by**

   determining a state space for the vehicle (10) by determining the minimum and the maximum based on the trajectories (1, 7) of the vehicle (10) per grid cell ($c_{i,j}$) of a grid map of a lane (6) on which the vehicle (10) is travelling for at least one property of points of the trajectories (1, 7) that lie within the respective grid cell ($c_{i,j}$), wherein the determination and/or monitoring of the target trajectory (8) are/is carried out depending on the state space.

4. Method according to Claim 2 and 3,
   **characterized by**

   determining a common state space for the vehicle (10) by combining the occupancy map and the state space for the vehicle,
   wherein the minimum and the maximum for the at least one property of points on the collision-free trajectories (1, 7) that lie within the respective grid cell ($c_{i,j}$) are determined based on the collision-free trajectories (1) of the vehicle (10) per grid cell ($c_{i,j}$), and

wherein the determination and/or monitoring of the target trajectory (8) are/is carried out depending on the common state space.

5. Method according to one of the preceding claims, **characterized in that**

the degree of freedom $f_{ci,j}$ for at least one certain grid cell $c_{i,j}$ is calculated by means of the following equation (A1):

$$f_{ci,j} \; = \; \alpha(\Delta V_{ci,j}/\nu) \; + \; \beta(\Delta \Psi_{ci,j}/\psi) \; + \; \gamma(\Delta T_{ci,j}/t) \qquad (A1),$$

wherein $\alpha$, $\beta$ and $\gamma$ are constants,
wherein $\Delta V_{ci,j}$ corresponds to a difference between the maximum speed and the minimum speed within the grid cell ci,j,
wherein $\Delta \psi_{ci,j}$ corresponds to a difference between the maximum vehicle orientation and the minimum vehicle orientation within the grid cell ci,j,
wherein $\Delta T_{ci,j}$ corresponds to a difference between the maximum time and the minimum time within the cell ci,j, and
wherein $\nu$, $\psi$ and t are properties of points of the collision-free trajectories (1), wherein v defines the speed of the vehicle (10) at the respective point when travelling a trajectory, wherein $\psi$ defines the vehicle orientation of the vehicle (10) at the respective point when travelling the trajectory, and wherein t defines the point in time at which the vehicle (10) is at the respective point when it travels the trajectory.

6. Method according to one of the preceding claims,
**characterized in that**

a first threshold value and a second threshold value that is smaller than the first threshold value are determined depending on the degree of freedom at the first point in time,
the target trajectory of the vehicle is determined as the target trajectory (8) that was calculated at the first point in time if the degree of freedom calculated at the second point in time is greater than the first threshold value,
the target trajectory of the vehicle is recalculated if the degree of freedom calculated at the second point in time is smaller than the first threshold value but greater than the second threshold value, and
the determination and/or monitoring of the target trajectory (8) are/is terminated if the degree of freedom calculated at the second point in time is smaller than the second threshold value.

7. Method according to Claim 5 or 6,
**characterized in that**
the degree of freedom is determined for at least one grid cell through which the target trajectory (8) passes.

8. Method according to one of the preceding claims,
**characterized by**

predetermining the target trajectory (8) for the vehicle (10), and
determining or monitoring whether the predetermined target trajectory (8) is maintained depending on the collision-free trajectories.

9. Device for determining and/or monitoring a target trajectory (8) of a vehicle (10) by means of which a starting point (SP) corresponding to the current position of the vehicle (10) is connected to a target point (sTP),

wherein the device (20) comprises detection means (2, 3, 5) and processor means (4),
wherein the detection means (4) are equipped to detect a respective target trajectory for road users (21, 22),
wherein each of the further target trajectories connects the starting point of the respective road user (21; 22) to a target point corresponding to the respective road user (21),
wherein the processor means (4) are equipped to determine different trajectories (1, 7) of the vehicle that connect the starting point (SP) to the target point (sTP) in order to determine those trajectories of the vehicle (10) as collision-free trajectories (1) that do not result in a collision with one of the road users (21, 22), and in order to determine and/or to monitor the target trajectory (8) depending on the collision-free trajectories (1) of the vehicle (10),
wherein the processor means (4) are equipped to determine the minimum and the maximum based on the collision-free trajectories (1) of the vehicle (10) for grid cells ($c_{i,j}$) of a grid map of a lane (6) on which the vehicle (10) is travelling for at least one property of points of the collision-free trajectories (1) that lie within the respective grid cell ($c_{i,j}$),

wherein the processor means (4) are equipped to determine a degree of freedom depending on the minimum and the maximum of the at least one property,

wherein the processor means (4) are equipped to determine the degree of freedom at a first point in time and at a later second point in time,

wherein the processor means (4) are equipped to determine and/or to monitor the target trajectory (8) of the vehicle (10) depending on a comparison between the degree of freedom that is determined at the second point in time and at least one threshold value that is determined depending on the degree of freedom that is determined at the first point in time,

wherein the at least one property is selected from a group comprising:

- a speed of the vehicle (10),
- a vehicle orientation of the vehicle (10), and
- a point in time at which the vehicle (10) is in the grid cell ($c_{i,j}$) according to the respective trajectory (1),

wherein the degree of freedom is determined such that the degree of freedom is greater the more possible actions exist for the vehicle (10) within the respective grid cell ($c_{i,j}$).

10. Vehicle having a device (20) according to Claim 9.


**Revendications**

1. Procédé de détermination et/ou de surveillance automatique d'une trajectoire voulue (8) pour un véhicule (10), avec lequel un point de départ (SP), lequel correspond à la position actuelle du véhicule (10), est relié à un point de destination (sTP), comprenant :

détermination de différentes trajectoires (1, 7) du véhicule (10), lesquelles relient le point de départ (SP) au point de destination (sTP),

acquisition respectivement d'une trajectoire voulue supplémentaire pour les usagers de la route (21, 22), chacun des trajectoires voulues supplémentaires reliant le point de départ de l'usager de la route (21) respectif à un point de destination correspondant à l'usager de la route (21, 22) respectif,

détermination en tant que trajectoires sans collision (1) des trajectoires du véhicule (10) qui n'entraînent pas une collision avec l'un des usagers de la route (21, 22) supplémentaires, lorsque l'usager de la route (21, 22) respectif se déplacer sur sa trajectoire voulue, et

détermination et/ou surveillance de la trajectoire voulue (8) du véhicule (1) en fonction des trajectoires sans collision (1) du véhicule (10),

le minimum et le maximum étant déterminés à partir des trajectoires sans collision (1) du véhicule (10) pour des cellules de grille ($c_{i,j}$) d'une carte quadrillée d'une voie de circulation (6) sur laquelle se déplace le véhicule (10) pour au moins une propriété de points des trajectoires sans collision (1), qui se trouvent à l'intérieur de la cellule de grille ($c_{i,j}$) respective,

un degré de liberté étant déterminé en fonction du minimum et du maximum de l'au moins une propriété,

le degré de liberté étant déterminé à un premier instant et à un deuxième instant ultérieur,

la trajectoire voulue (8) du véhicule (10) étant déterminée et/ou surveillée en fonction d'une comparaison entre le degré de liberté déterminée au deuxième instant et au moins une valeur de seuil, laquelle est déterminée en fonction du degré de liberté déterminé au premier instant,

l'au moins une propriété étant sélectionnée dans un groupe comprenant :

* une vitesse du véhicule (10),
* une orientation du véhicule (10), et
* un instant auquel le véhicule (10) se trouve dans la cellule de grille ($c_{i,j}$) conformément à la trajectoire (1) respective,

le degré de liberté étant déterminé de telle sorte que le degré de liberté est d'autant plus grand qu'il existe davantage de possibilités d'action pour le véhicule (10) à l'intérieur de la cellule de grille ($c_{i,j}$) respective.

2. Procédé selon la revendication 1,
   **caractérisé par**,

   détermination d'une carte d'occupation qui indique si, à un instant déterminé, l'un des usagers de la route (21, 22) se trouve dans une cellule de grille ($c_{i,j}$) déterminée d'une carte quadrillée d'une voie de circulation (6) sur laquelle se déplace le véhicule (10), et
   en ce que la détermination des trajectoires sans collision (1) est effectuée en fonction de la carte d'occupation.

3. Procédé selon la revendication 1 ou 2,
   **caractérisé par**,

   détermination d'un espace d'état pour le véhicule (10) en déterminant le minimum et le maximum à partir des trajectoires (1, 7) du véhicule (10) par cellule de grille ($c_{i,j}$) d'une carte quadrillée d'une voie de circulation (6) sur laquelle se déplace le véhicule (10) pour au moins une propriété de points des trajectoires (1, 7), qui se trouvent à l'intérieur de la cellule de grille ($c_{i,j}$) respective,
   la détermination et/ou la surveillance de la trajectoire voulue (8) étant effectuée en fonction de l'espace d'état.

4. Procédé selon les revendications 2 et 3,
   **caractérisé par**,

   détermination d'un espace d'état commun pour le véhicule (10) en combinant la carte d'occupation et l'espace d'état pour le véhicule,
   le minimum et le maximum étant déterminés à partir des trajectoires sans collision (1) du véhicule (10) par cellule de grille ($c_{i,j}$) pour au moins une propriété de points des trajectoires sans collision (1, 7) qui se trouvent à l'intérieur de la cellule de grille ($c_{i,j}$) respective, et
   la détermination et/ou la surveillance de la trajectoire voulue (8) étant effectuée en fonction de l'espace d'état commun.

5. Procédé selon l'une des revendications précédentes, **caractérisé en ce que**

   le degré de liberté $f_{ci,j}$ pour au moins une cellule de grille $c_{i,j}$ déterminée est calculé par l'équation (A1) suivante :

   $$f_{ci,j} = \alpha\,(\Delta V_{ci,j}/v) + \beta\,(\Delta\psi_{ci,j}/\psi) + y\,(\Delta T_{ci,j}/t) \qquad (A1),$$

   a, $\beta$ et y étant des constantes,
   $\Delta V_{ci,j}$ correspondant à une différence entre la vitesse maximale et la vitesse minimale à l'intérieur de la cellule de grille $c_{i,j}$,
   $\Delta\psi c_{i,j}$ correspondant à une différence entre l'orientation maximale du véhicule et l'orientation minimale du véhicule à l'intérieur de la cellule de grille $c_{i,j}$, $\Delta T_{ci,j}$ correspondant à une différence entre le temps maximal et le temps minimal à l'intérieur de la cellule $c_{i,j}$, et
   v, $\psi$ et t étant les propriétés de points des trajectoires sans collision (1),
   v définissant la vitesse que présente le véhicule (10) au point respectif en parcourant une trajectoire, $\psi$ définissant l'orientation du véhicule que présente le véhicule (10) au point respectif en parcourant la trajectoire, et t définissant l'instant auquel le véhicule (10) se trouve au point respectif lorsqu'il parcourt la trajectoire.

6. Procédé selon l'une des revendications précédentes,
   **caractérisé en ce**

   **qu'**une première valeur de seuil et une deuxième valeur de seuil, laquelle est inférieure à la première valeur de seuil, sont déterminées en fonction du degré de liberté au premier instant,
   **que** la trajectoire voulue du véhicule est déterminée comme étant la trajectoire voulue (8) qui a été calculée au premier instant, lorsque le degré de liberté calculé au deuxième instant est supérieur à la première valeur de seuil,
   **que** la trajectoire voulue du véhicule est recalculée lorsque le degré de liberté calculé au deuxième instant est inférieur à la première valeur de seuil, mais supérieur à la deuxième valeur de seuil, et
   **que** la détermination et/ou la surveillance de la trajectoire voulue (8) est interrompue lorsque le degré de liberté calculé au deuxième instant est inférieur à la deuxième valeur de seuil.

**7.** Procédé selon la revendication 5 ou 6,
**caractérisé en ce**
**que** le degré de liberté est déterminé pour au moins une cellule de grille à travers laquelle passe la trajectoire voulue (8).

**8.** Procédé selon l'une des revendications précédentes,
**caractérisé par**

prédéfinition de la trajectoire voulue (8) pour le véhicule (10), et
détermination ou surveillance si la trajectoire voulue (8) prédéfinie est conservée, en fonction des trajectoires sans collision.

**9.** Dispositif de détermination et/ou de surveillance d'une trajectoire voulue (8) d'un véhicule (10), avec lequel un point de départ (SP), lequel correspond à la position actuelle du véhicule (10), est relié à un point de destination (sTP),

le dispositif (20) comportant des moyens d'acquisition (2, 3, 5) et des moyens à processeur (4),
les moyens d'acquisition (4) étant configurés pour acquérir, auprès d'usagers de la route (21, 22), respectivement une trajectoire voulue, chacune des trajectoires voulues supplémentaires reliant le point de départ de l'usager de la route (21, 22) respectif à un point de destination correspondant à l'usager de la route (21) respectif,
les moyens à processeur (4) étant configurés pour déterminer différentes trajectoires (1, 7) du véhicule qui relient le point de départ (SP) au point de destination (sTP), afin de déterminer en tant que trajectoires sans collision (1) celles des trajectoires du véhicule (10) qui n'entraînent pas une collision avec l'un des usagers de la route (21, 22), et ainsi déterminer et/ou surveiller la trajectoire voulue (8) en fonction des trajectoires sans collision (1) du véhicule (10), les moyens à processeur (4) étant configurés pour déterminer le minimum et le maximum à partir des trajectoires sans collision (1) du véhicule (10) pour des cellules de grille ($c_{i,j}$) d'une carte quadrillée d'une voie de circulation (6) sur laquelle se déplace le véhicule (10) pour au moins une propriété de points des trajectoires sans collision (1), qui se trouvent à l'intérieur de la cellule de grille ($c_{i,j}$) respective, les moyens à processeur (4) étant configurés pour déterminer un degré de liberté en fonction du minimum et du maximum de l'au moins une propriété,
les moyens à processeur (4) étant configurés pour déterminer le degré de liberté à un premier instant et à un deuxième instant ultérieur,
les moyens à processeur (4) étant configurés pour déterminer et/ou surveiller la trajectoire voulue (8) du véhicule (10) en fonction d'une comparaison entre le degré de liberté déterminée au deuxième instant et au moins une valeur de seuil, laquelle est déterminée en fonction du degré de liberté déterminé au premier instant, l'au moins une propriété étant sélectionnée dans un groupe comprenant :

* une vitesse du véhicule (10),
* une orientation du véhicule (10), et
* un instant auquel le véhicule (10) se trouve dans la cellule de grille ($c_{i,j}$) conformément à la trajectoire (1) respective,

le degré de liberté étant déterminé de telle sorte que le degré de liberté est d'autant plus grand qu'il existe davantage de possibilités d'action pour le véhicule (10) à l'intérieur de la cellule de grille ($c_{i,j}$) respective.

**10.** Véhicule comprenant un dispositif (20) selon la revendication 9.

FIG. 1

FIG. 2

$C_{i;\,j}$

FIG. 3

FIG. 4

FIG. 5

FIG. 6

FIG. 7

| Bestimmen der Soll-Trajektorie. | S1 |

| Bestimmen aller Trajektorien. | S2 |

| Bestimmen aller kollisionsfreien Trajektorien abhängig von anderen Verkehrsteilnehmern zum Zeitpunkt t=0. | S3 |

| Bestimmen Freiheitsgrad f(t0) zum Zeitpunkt t=0. | S4 |

| Ende der Soll-Trajektorie erreicht? | S5 |

ja → Ende

nein

| Änderung des Umfelds oder der Pläne anderer Verkehrsteilnehmer? | S6 |

nein

ja

| Bestimmen aller kollisionsfreien Trajektorien abhängig von den Änderungen zum aktuellen Zeitpunkt t1. | S7 |

| Bestimmen Freiheitsgrad f(t1) zum Zeitpunkt t1. | S8 |

| 1. Schwelle (Summe(f(t=0))) < Summe(f(t1))? | S9 |

ja

nein

| 2. Schwelle (Summe(f(t=0)))≤Summe(f(t1))≤1. Schwelle((f(t=0))) | S10 |

nein → Abbruch

ja

| Anpassen der Soll-Trajektorie. | S11 |

FIG. 8

22

**EP 3 144 920 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013225057 A1
- DE 102012009297 A1
- DE 602005001615 T2
- DE 102012203187 A1
- DE 102013217486 A1